# EUROPEAN PATENT APPLICATION

(11) **EP 4 145 077 A1**
(43) Date of publication of application: **08.03.2023**
(21) Application number: 21020449.1
(22) Date of filing: 06.09.2021
(51) Int. Cl.: F27B 7/20, B01J 6/00, C01B 32/50, C04B 2/08

(54) **METHOD OF HEATING SOLIDS IN A REACTOR TO PRODUCE A HEAT-TREATED MATERIAL**

(71) Applicant: Holcim Technology Ltd, 6300 Zug (CH)
(72) Inventor: BOES Karl-Heinz, CH-5113 Holderbank (CH); STOFFEL Beat, CH-5113 Holderbank (CH); WEIHRAUCH Michael, CH-5113 Holderbank (CH); STUTZ Thomas, CH-5113 Holderbank (CH); BUCHER Ernst, CH-5113 Holderbank (CH)
(74) Representative: Keschmann, Marc

(57) **Abstract**

A method of heating solids in a reactor to produce a heat-treated material, such as a cementitious, a supplementary cementitious, or a pozzolanic material, comprising: conveying the solids through the reactor from a feeding end to a discharge end so as to form a material bed extending from the feeding end to the discharge end; heating the solids during said conveying step to at least 600°C to transform the solids into the heat-treated material, wherein said heating step comprises applying radiative heating to the material bed from above and/or from the sides, wherein said radiative heating contributes at least 60%, preferably at least 80% of the thermal energy needed for said heating step, and wherein the material bed is mobilized during the conveying step in order to renew the surface of the material bed that is exposed to the radiative heating.

## Description

The invention refers to a method of heating solids in a reactor to produce a heat-treated material, such as a cementitious, a supplementary cementitious, or a pozzolanic material, and to a device for carrying out this method.

In the cement industry, various types of raw material may need thermal treatment, in order to make them suitable for use as a cementitious material or as a supplementary cementitious material or as any other type of component in a cement composition. For example, cement raw meal needs to be heated at temperatures of above 1,300°C in order to produce cement clinker. Further, the production of pozzolanic material requires the heat-treatment of a respective raw material, one example being the calcination of clay to obtain calcined clay by dehydroxylation. Further, it has been proposed to process different types of waste material, such as contaminated soils, into cementitious or pozzolanic materials by applying a heat-treatment.

A thermal treatment generally results in the calcination, dehydroxylation, activation, or removing/destroying of hydrocarbon containing material.

In the cement industry, the thermal treatment of raw material is usually carried out in a rotary kiln or in a vessel type calciner that is heated by burning fossil fuel. Recently, electrical heating of a kiln has been proposed as an alternative to the use of fossil fuel by L.-A. Tokheim et al.: "COMBINED CALCINATION AND CO2 CAPTURE IN CEMENT CLINKER PRODUCTION BY USE OF ELECTRICAL ENERGY", The 10th Trondheim Conference on CO2 Capture, Transport and Storage, June 17-19, 2019. This reference describes on a theoretical level various possibilities of using electrical energy to transfer heat to the raw material, such as electrical resistance heating, plasma heating, induction heating or microwave heating. By replacing the fuel combustion with electrical energy as the energy source for calcination of the raw material, two simultaneous effects are obtained: i) the CO₂ formation from the fuel combustion is eliminated, which reduces the total CO₂ formation from the heat treatment production process, ii) the exhaust gas is (almost) pure CO₂, meaning that this gas can be routed directly to a CO₂ processing unit without the need for a CO₂ separation plant.

Although some theoretical concepts have been proposed, no specific kiln designs have become known for using electrical energy in the heat treatment of raw material in the cement industry. Further, there is a general need for improving the heat transfer to the raw material to be heat-treated, irrespective of the type of energy used. Further, the heat-treatment process shall be a continuous rather than a batchwise process for being suitable in industrial applications.

Therefore, the present invention aims at optimizing the heat-treatment of various raw materials for producing a cementitious material, a supplementary cementitious material or any other type of component in a cement composition.

To solve this object, the invention provides a method of heating solids in a reactor to produce a heat-treated material, such as a cementitious, a supplementary cementitious, or a pozzolanic material, comprising:
- continuously feeding solids into the reactor at a feeding end of the reactor,
- conveying the solids through the reactor from the feeding end to a discharge end so as to form a material bed extending from the feeding end to the discharge end,
- continuously discharging the heat-treated material at the discharge end,
- heating the solids during said conveying step to at least 600°C to transform the solids into the heat-treated material,
   wherein said heating step comprises applying radiative heating to the material bed from above and/or from the sides, wherein said radiative heating preferably contributes at least 60%, preferably at least 80% of the thermal energy needed for said heating step, and
   wherein the material bed is mobilized during the conveying step in order to renew the surface of the material bed that is exposed to the radiative heating.

By having a material bed that is conveyed from the feeding end to the discharge end of the reactor and applying radiative heating to the material bed during the conveying step, a continuous process is provided, that improves the heat transfer to the material. Further, the mobilizing of the material bed during the conveying step results in that too high or too low temperatures are avoided within the material bed. The mobilizing step causes a constant renewal of the surface of the material that is exposed to the radiative heating. Further, the process of the invention allows an easy control of the heating process by varying the conveying speed of the material bed. The lower the conveying speed is set, the longer is the residence time of the material, and the higher the temperature of the material will get.

The invention separates the function of material transport and the heating by using separate elements for each function, i.e., conveying means for conveying the material bed and radiant heater elements for heating the material bed.

The step of applying radiative heating to the material bed from above and/or from the sides is to be understood as bringing external energy into the reactor by radiative heating. External energy does not include internal heat that comes from or is generated in the rector itself.

Another advantage of the process of the invention is that by applying radiative heating from above and/or from the sides, the heating elements are not exposed to contact with material and have better performance and lifetime.

If in contrast most of the heat were to come from a heating element that is in contact with material bed, such contact heating element would need to be at temperatures of about 1000°C to heat the material sufficiently. Not many steel grades can withstand such temperatures over long periods of time, especially when subjected to the mechanical forces that result from conveying the materials through the device. The inventive use of radiative heating thus results in being able to select a wider range of steel grades for material contacting elements, such as a feeding screw for feeding the material from the feeding end to the discharge end, and to increase the life-time of the device.

Further, there is no limit to the nature or the chemical composition of the material to be heat-treated, since radiative heating may be applied to any solid particulate material, such as clay, limestone and clinker raw meal. Further, since the radiative heating does not require any fuel to be burnt inside the reactor, the exhaust gas extracted from the reactor can have a very high concentration of CO₂ and can be used as CO₂ feedstock to produce synthetic fuels, hydrocarbons or biomass, or to any other type of CO₂ processing, such as carbon capture and sequestration processes.

According to a preferred embodiment of the invention, said conveying and said mobilizing step are carried out by using at least one feeding screw extending between the feeding end and the discharge end of the reactor. A feeding screw is acting as a screw conveyor and is a proven device for conveying material along a straight path and has the beneficial effect that it results in a constant revolving action on the material bed, thereby renewing the surface of the material bed that is exposed to the radiative heating. In other words, the internal mixing inside the material that is carried out by the feeding screw brings colder less reacted material to the surface where it receives the radiation heat.

Due to the typically low rotational speed of a screw conveyor, a low velocity is imparted to the material, resulting in a reduced dust content in the atmosphere above the material bed. This helps to increase the lifetime and performance of the radiating heating elements.

Preferably, two or more feeding screws may be used in parallel, i.e., side by side, and/or in a consecutive arrangement.

The at least one feeding screw may preferably also be used to introduce additional heat into the material bed. In this case, said heating step additionally comprises applying heat to the material bed by heating the feeding screw by using external energy, such as by electrical resistance heating.

Alternatively, said conveying and said mobilizing step may be carried out by using a walking floor conveyor.

Alternatively, said conveying and said mobilizing step may also be carried out by blowing a gas into the reactor so as to fluidize and transport the material bed.

Said radiative heating may preferably comprise emitting thermal radiation from a plurality of radiant heater elements that are arranged at a roof and/or at side walls of the reactor along the material bed. Preferably, the radiant heater elements are arranged or distributed along the entire length of the reactor from the feeding end to the discharge end.

The heating process may be controlled by modifying the energy supplied to the radiation radiant heater at different locations along the length of the reactor and/or by changing the material residence time.

The radiant heater elements may be operated by any suitable source of heat. However, a preferred embodiment of the invention provides that the radiant heater elements are operated by electrical energy only. Alternatively, the radiant heater elements are operated by a mixture of electrical energy and another source of energy, such as by burning a fuel. Using electrical energy allows to reduce the CO₂ footprint of the heating process, if the electricity has been produced from carbon neutral sources or from renewable energy. Further, the energy conversion efficiency in converting electrical energy into radiative heating is very high.

According to a preferred embodiment, the radiant heater elements are made of a ceramic material, such as silicon carbide, that is heated by electrical heating. Silicon carbide heating elements may be heated to a temperature of up to 1,600°C and thus provide sufficient heat energy to heat the solid raw material to a temperature of over 1,200°C.

The energy efficiency may further be enhanced by recirculating the exhaust gas (e.g. CO₂) that has been extracted from the reactor into the reactor and optionally through the material bed. Thus the waste heat of the reactor is used as an additional source of heat in addition to the radiative heating.

Alternatively, the heat of the exhaust gas extracted from the reactor may be used to generate electricity or to heat and/or dry other material streams at the site, such as at the cement manufacturing plant.

According to another preferred embodiment of the invention, the process may further comprise the step of preheating the solids before feeding the solids into the reactor. Preheating may be performed by using installations that are existing in a cement manufacturing plant, such as a preheater tower for preheating cement raw meal. When the heat-treated material to be produced in the reactor requires a heating step above 1,200°C, the reactor may be placed at the lower stages of the cement raw meal preheater and the solids to be heat-treated in the reactor are drawn-off from the preheater before they reach the rotary cement kiln.

In this connection a preferred embodiment is characterized in that the solids to be heat-treated is a raw material for producing a cementitious or pozzolanic material, such as cement raw meal or clay, and wherein the preheating step is carried out in a preheater of a cement manufacturing plant, and the heat-treated material discharged from the reactor is fed into a rotary kiln of the cement manufacturing plant.

The reactor can also be used in a stand-alone configuration in situations where the material to be produced requires temperatures between 600°C up to 1,200°C.

According to another aspect, the invention refers to a device for carrying out the inventive method, comprising:
- a reactor having a feeding opening at a feeding end and a discharge opening at a discharge end,
- conveying means arranged within the reactor for conveying solids through the reactor from the feeding end to the discharge end,
- radiant heater elements that are arranged at a roof and/or at side walls of the reactor along the conveying means for heating the solids during said conveying step to at least 600°C, wherein the conveying means are configured to mobilize the solids during the conveying step in order to renew the surface of the material that is exposed to radiative heating from the radiant heater elements.

Preferably, said conveying means comprise at least one feeding screw extending between the feeding end and the discharge end of the reactor.

Alternatively, said conveying means comprise a walking floor conveyor.

Alternatively, said conveying means comprise a gas inlet that fluidizes the material to transport it.

As mentioned above, the radiant heater elements may preferably be operated by electrical energy only.

The invention will now be described by reference to exemplary embodiments shown in the attached drawings. Fig. 1 shows an embodiment of a reactor according to the invention for carrying out a heat treatment, Fig. 2 shows the integration of a reactor into a cement manufacturing plant and Fig. 3 shows the reactor in a stand-alone plant configuration.

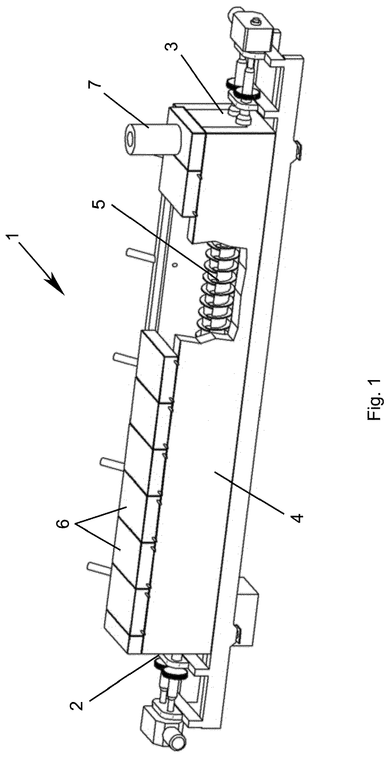

Fig. 1 shows a reactor 1 which has a generally longitudinal housing 4 with a feeding end 2 a discharge end 3. The solids to be heated are fed into the reactor at the feeding end 2 and are conveyed along the longitudinal direction of the reactor 1 by means of a pair or parallel screw conveyors 5 extending from the feeding end 2 to the discharge end 3. Thus, a longitudinal material bed is formed that is continuously moved through the closed reactor chamber formed within the housing 4 of the reactor 1. To heat the reactor chamber, a plurality of radiant heater elements 6 are arranged at the roof of the reactor 1 along the longitudinal extension of the reactor 1. The radiant heater elements 6 are each operated by electrical energy and comprise resistant heating elements that produce the heat required for the radiant heater elements 6 to radiate thermal energy onto the material bed.

The radiant heater elements 6 can comprise silicon carbide heating elements, which are generally formed as rod-shaped elements.

The thermal treatment results in the calcination, dehydroxylation, activation, and/or removing/destroying of hydrocarbon containing materials. The exhaust gas of the reactor 1 is extracted from the reactor chamber via the exhaust pipe 7.

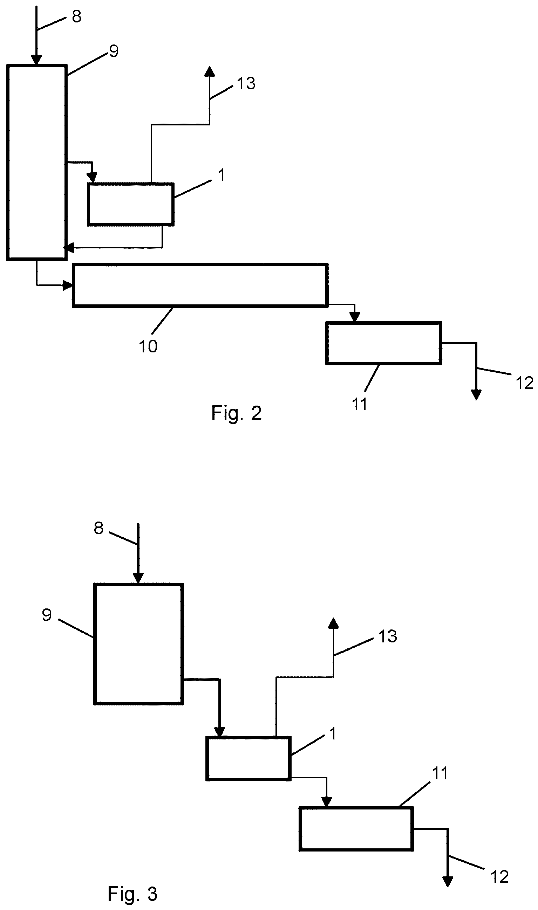

Fig. 2 schematically illustrates a cement production process, into which the inventive method has been incorporated. In the cement clinker production plant ground raw meal 8 is charged into a preheater string 9, where it is preheated in countercurrent to the hot exhaust gases coming from a rotary clinker kiln 10. The preheater string 9 comprises a plurality of interconnected cyclone suspension-type preheater stages (not shown).

The preheated raw meal is then introduced into the rotary kiln 10, where it is calcined to obtain cement clinker. The clinker leaves the rotary kiln 10 and is cooled in a clinker cooler 11, where the final product 12 is obtained.

At least partially preheated raw meal is taken from the preheater string 9 downstream of one of the lower preheater stages at a temperature of 400-800°C, preferably 600-800°C, and fed into the reactor 1, wherein only part of the raw meal stream of the preheater string 9 or the entire raw meal stream of the preheater string 9 may be introduced into the reactor 1. The raw meal is heated to 800-1,200 °C in the reactor 1 and at least partially decarbonated while producing CO₂. The at least partially decarbonated product that leaves the reactor 1 is fed back to the preheater 9 or is fed directly to the feeding end of the kiln 10. The CO₂ 13 is withdrawn from the reactor 1 and may be introduced into a heat recovery device (not shown) for recovering heat from the CO₂.

In the alternative embodiment shown in Fig. 3 the rector 1 is used separately, i.e., without being integrated into a cement production line. Raw material 8 is fed into a preheater 9, whereupon preheated material is introduced into the reactor 1. The heat-treated product is cooled in a cooler 11 and the final product leaves at 12.

## Claims

1. A method of heating solids in a reactor to produce a heat-treated material, such as a cementitious or pozzolanic material, comprising:
- continuously feeding solids into the reactor at a feeding end of the reactor,
- conveying the solids through the reactor from the feeding end to a discharge end so as to form a material bed extending from the feeding end to the discharge end,
- continuously discharging the heat-treated material at the discharge end,
- heating the solids during said conveying step to at least 600°C to transform the solids into the heat-treated material,
wherein said heating step comprises applying radiative heating to the material bed from above and/or from the sides, wherein said radiative heating preferably contributes at least 60%, preferably at least 80% of the thermal energy needed for said heating step, and
wherein the material bed is mobilized during the conveying step in order to renew the surface of the material bed that is exposed to the radiative heating.

2. The method according to claim 1, wherein said conveying and said mobilizing step are carried out by using at least one feeding screw extending between the feeding end and the discharge end of the reactor.

3. The method according to claim 1, wherein said conveying and said mobilizing step are carried out by using a walking floor conveyor.

4. The method according to claim 1, wherein said conveying and said mobilizing step are carried out by blowing a gas into the reactor.

5. The method according to any one of claims 1 to 4, wherein said radiative heating comprises emitting thermal radiation from a plurality of radiant heater elements that are arranged at a roof and/or at side walls of the reactor along the material bed.

6. The method according to claim 5, wherein the radiant heater elements are operated by electrical energy only.

7. The method according to any one of claims 1 to 6, further comprising the step of preheating the solids before feeding the solids into the reactor.

8. The method according to any one of claims 1 to 7, wherein the heating step is carried out to heat the solids to a temperature of at least 800°C, preferably at least 1,000°C.

9. The method according to claim 2, wherein said heating step additionally comprises applying heat to the material bed by heating the feeding screw by using external energy, such as by electrical resistance heating.

10. The method according to any one of claims 1 to 9, wherein the solids is a raw material for producing a cementitious or pozzolanic material, such as cement raw meal or clay, and wherein the preheating step is carried in a preheater of a cement manufacturing plant, and the heat-treated material discharged from the reactor is fed into a rotary kiln of the cement manufacturing plant.

11. A device for carrying out a method according to any one of claims 1 to 10 comprising:
- a reactor having a feeding opening at a feeding end and a discharge opening at a discharge end,
- conveying means arranged within the reactor for conveying solids through the reactor from the feeding end to the discharge end,
- radiant heater elements that are arranged at a roof and/or at side walls of the reactor along the conveying means for heating the solids during said conveying step to at least 600°C, wherein the conveying means are configured to mobilize the solids during the conveying step in order to renew the surface of the material that is exposed to radiative heating from the radiant heater elements.

12. The device according to claim 11, wherein said conveying means comprise at least one feeding screw extending between the feeding end and the discharge end of the reactor.

13. The device according to claim 12, wherein the at least one feeding screw is configured as a heating element that is heated by electrical energy, such as by resistance heating.

14. The device according to claim 11, wherein said conveying means comprise a walking floor conveyor.

15. The device according to claim 11, wherein said conveying means comprise a gas inlet for introducing a fluidizing gas that fluidizes the material to transport it.

16. The device according to any one of claims 11 to 13, wherein the radiant heater elements are operated by electrical energy only.

17. The device according to any one of claims 11 to 16, further comprising a preheater for preheating the solids before feeding the solids into the reactor.

18. Use of the device according to any one of claims 11 to 17 to produce a concentrated CO₂ stream from calcined material, where the CO₂ content in the stream is at least 80 vol.-%.
